# EUROPÄISCHE PATENTSCHRIFT

(11) **EP 0 916 253 B1**
(45) Veröffentlichungstag und Bekanntmachung des Hinweises auf die Patenterteilung: **04.09.2002**
(21) Anmeldenummer: 98120346.6
(22) Anmeldetag: 28.10.1998
(51) Int. Cl.: A01F 15/08, B30B 9/30

(54) **Kanalballenpresse mit einer Regeleinrichtung**
Crop baler with density control system
Dispositif de régulation de densité pour presse à balles

(30) Priorität: 05.11.1997 DE 19748748
(43) Veröffentlichungstag der Anmeldung: 19.05.1999
(73) Patentinhaber: Lely Maschinenfabrik GmbH, 38304 Wolfenbüttel (DE)
(72) Erfinder: Wilkens, Dieter, Dr.-Ing., 38302 Wolfenbüttel (DE)

(56) Entgegenhaltungen:
- EP-A- 0 235 397
- EP-A- 0 389 322
- US-A- 4 166 414

## Beschreibung

Die Erfindung betrifft eine Kanalballenpresse mit einer Regeleinrichtung nach dem Oberbegriff des Patentanspruches 1.

Die Steuerung der Preßkanalspanneinrichtung mittels einer Regeleinrichtung ist bei nach dem Strangpreßprinzip arbeitenden Kanalballenpressen von bedeutendem Einfluß auf die Preßdichte der Ballen. Der auszustoßende, umschnürte Ballen übt infolge seines Reibungswiderstandes im ausgangsseitigen, in der Durchlaßweite verstellbaren Preßkanalabschnitt einen Gegendruck aus, dessen Höhe die Dichte des neuzubildenden Ballens bestimmt. Je größer der Reibwiderstand ist, desto höher die Preßdichte des neuen Ballens. Feuchtes Gut hat einen verhältnismäßig größeren Widerstand als trockenes Gut und wird daher stark zusammengepreßt, während trockenes Gut Ballen mit wesentlich geringerer Dichte ergibt, wenn die Durchlaßweite der Preßkanalöffnung nicht entsprechend der Beschaffenheit des Gutes verändert wird. Da sich der Trockenheitsgrad z.B. von zu pressendem Heu im Verlauf des Tages schnell und ständig ändern kann, jedoch die Herstellung von Ballen mit gleichmäßiger Preßdichte angestrebt wird, hat man bereits versucht, die Preßkanalöffnung durch selbsttätig wirkende Mittel zu regeln. Bei einer durch die EP 0389322 B1 bekannten Ausführung wird die gemessene Preßkolbenkraft bzw. die gemessene Reaktionskraft des Preßkolbens dazu verwendet, um in Abhängigkeit von dieser den Druck in der Druckleitung der Preßkanalspanneinrichtung so zu steuern, daß die Preßkolbenkraft weitgehend konstant bleibt. Dieser Vorrichtung haften folgende Nachteile an:

Je nach Durchsatzleistungen der Presse ist die gerade zu verdichtende Packung bei gleicher Materialart und -feuchte unterschiedlich groß. Da diese Packung zur Beseitigung von Sollkraftüberschreitungen herangezogen wird, wird der Druck abgesenkt, obwohl sich der Gegendruck im Preßkanal nicht erhöht hat, weil die Reibkräfte bei gleichem Material unverändert sind.

Bei Messung der Reaktionskräfte des Preßkolbens am Exzenter-Hauptgetriebe kommt hinzu, daß große Packungen bei sonst gleichem Material Preßkraftspitzen bei Kurbelstellungen mit größerem wirksamen Hebelarm verursachen, so daß der Druck relativ zuviel abgesenkt wird.

Ferner führen Kraftspitzen, wie diese beim Schneiden unterschiedlich feuchter und/oder großer Packungen sowie auch bei jedem Preßkolbenhub oder bei Zuführung eines Haufens auftreten, zu unerwünschten, zu starken Druckabfällen.

Der am Druckbegrenzungsventil eingestellte Soll-Druckwert auf die Preßkanalspanneinrichtung läßt sich nicht in Abhängigkeit von der Preßkolbenkraft automatisch verändern.

Die mit der vorgenannten Konstant-Preßkraftregelung erzeugten Ballen sind deshalb nicht so dicht, wie sie bei optimalen Bedingungen von der Kanalballenpresse erzielt werden könnten. Stellt man beispielsweise die optimale Preßkraft morgens beim Pressen von feuchtem Stroh ein, so reicht diese Preßkraft nicht aus, um mittags entsprechend feste Ballen in trockenem Material zu erzielen, d. h. man müßte manuell die Preßkraft nachstellen, was aufwendig ist und erfahrungsgemäß wird nicht die optimale Preßkraft eingestellt, weil der Betreiber sicherheitshalber unter diesem Wert bleibt, um Verstopfungen zu vermeiden.

Bei den bekannten Groß-Kanalballenpressen mit der Typbezeichnung D 6000 der Anmelderin erfolgt die Beaufschlagung und Steuerung der Preßkanalspanneinrichtung über Hydrozylinder in Abhängigkeit von einem Druckfühler derart, daß eine Konstantdruckregeleinrichtung ein Ventil betätigt, um den Hydraulikdruck abzusenken, wenn dieser in der Druckleitung zum Hydrozylinder oberhalb eines vorgegebenen Solldruckwertes liegt und erhöht den Hydraulikdruck, wenn der Hydraulikdruck in der Druckleitung unter einen vorgegebenen Sollwert absinkt. Mit dieser Steuerung der Preßkanalspanneinrichtung wird bei oszillierender, sich ändernder Preßkraft ein gleichmäßiger konstanter Hydraulikdruck erzeugt. Entsprechend lassen sich relativ höhere Ballenpreßdichten erzielen als mit der Konstantkraftregelung. Nachteilig ist aber, daß der Druckfühler nicht die Kompression des Halmgutes in Preßkanallängsrichtung oder den Bewegungswiderstand in Preßkanallängsrichtung mißt, sondern nur die Effekte einer Über- oder Unterkompression durch den mehr oder weniger großen Hydraulikdruck auf die in Preßkanalquerrichtung auf- bzw. zustellbaren Preßkanalspannschienen, d. h. bei dieser Art der Steuerung steigt z. B. bei Zuführung eines Materialhaufens oder eines feuchten Schwadstückes zunächst die Preßkolbenkraft an. Der Hydraulikdruck wird erst dann angepaßt, d. h. diese Störung kann erst dann ausgeregelt werden, nachdem diese am umschnürten auszustoßenden Ballen gemessen wurde, was im ungünstigen Fall eine Zeitverzögerung von 20 sec zwischen Auftreten und Messung bedeuten kann. Um Überlastungen im Antrieb zu vermeiden, ist eine Drehmoment-Überlastkupplung vorgesehen.

Aufgabe der vorliegenden Erfindung ist es, eine Kanalballenpresse mit einer Regeleinrichtung zu schaffen, welche vorgenannte Nachteile vermeidet und eine bessere Anpassung der Steuerung der Preßkanalspanneinrichtung an unterschiedliche Materialverhältnisse ermöglicht, um optimale Ballen unter optimalen Maschinenbedingungen zu erhalten, d. h. maximale Preßdichte ohne Überlastung der Kanalballenpresse.

Diese Aufgabe wird erfindungsgemäß mit den im Kennzeichen des Patentanspruches 1 angegebenen Merkmalen gelöst.

Ein Vorteil dieser Lösung gegenüber den bisherigen Lösungen liegt darin, daß man je nach Materialverhältnissen und Durchsatzleistung entweder die eine oder die andere Regelgröße zur Steuerung der Preßkanalspanneinrichtung wählen und damit die jeweiligen Vorteile in einer Kanalballenpresse nutzen kann. Besondere Vorteile bietet die erfindungsgemäße Lösung aber, weil sie es ermöglicht, die Preßkanalspanneinrichtung auch in Abhängigkeit von beiden Regelgrößen so zu steuern, daß der Einfluß der einen oder der anderen Regelungsart durch eine Mischeinrichtung mehr oder weniger zurückgenommen werden kann. Trockene Preßgüter sind elastischer als nasse Preßgüter. Ungleiche Schwade, Haufen und große Packungen, wie sie bei hohen Durchsatzleistungen entstehen, führen in Trockengütern folglich weniger zu Überlastungen der Presse als in Naßgütern, die ab bestimmter Pressung als starre Wand wirken können. Trockene Güter werden deshalb mit abgesenktem Einfluß der Konstantkraftregelung also mehr mit Konstantdruckregelung gepreßt, während bei nassen Gütern die Mischeinrichtung mehr auf Konstantkraftregelung gestellt wird, d. h. die Preßkanalspanneinrichtung reagiert relativ schnell auf Preßkraftspitzen mit entsprechender Druckentlastung, weil der Einfluß des Konstantkraftreglers dem Einfluß des Konstantdruckreglers entsprechend dem Mischverhältnis übergeordnet ist. Bei fehlender Gutszufuhr wird automatisch ganz auf Konstantdruckregelung geschaltet, um z. B. im Vorgewende aufgrund der abgesunkenen Preßkraft keine Druckerhöhung auf die Preßkanalspanneinrichtung zu bewirken. Erreicht die Preßkraft wieder einen vorbestimmten Wert, erfolgt automatisch Umschaltung auf die zuvor eingestellte Regelungsart bzw. den eingestellten Wert. Grundsätzlich bewirkt die Mischregelung von Konstantlast des Preßkolbens und Konstantdruck der Preßkanalspanneinrichtung eine Vergleichmäßigung der Kraft auf die Preßkanalspanneinrichtung, weil im Mischbetrieb weder der vorgegebene Soll-Preßkraftwert noch der vorgegebene Soll-Druckwert voll ausgeregelt werden können und sich Zwischenwerte einstellen. Ist die Mischeinrichtung mehr auf Konstantlast gestellt, so ergeben sich größere Druckschwankungen. Überwiegt der Konstantdruckregler, schwankt die Preßkraft mehr.

In weiterer Ausgestaltung ist vorgesehen, daß die Sollwerte der Regelgrößen und die Regelungsart sowie das Mischverhältnis an einer elektronischen Bedieneinheit voreinstellbar und sowohl gemessene Istwerte als auch die Sollwerte dem Bediener anzeigbar sind. Man stellt zunächst entsprechend den Gutsverhältnissen einen Solldruckwert ein und die Mischeinrichtung auf Null, d. h. Konstantdruckregelung. Dann liest man den Istkraftwert ab, der als Vorgabe übernommen wird, wenn er im optimalen Bereich liegt, oder man stellt einen gewünschten maximalen Vorgabewert ein. Anschließend wird der Mischer nach Bedarf so verstellt, daß eine optimale automatische Anpassung des Druckes in der Druckleitung zum Hydrozylinder der Preßkanalspanneinrichtung in Abhängigkeiten von den Mischsignalen erreicht wird.

Um grundsätzlich, d. h. unabhängig von vorgegebenen Kraft- und Druckwerten eine Überlastung der Antriebselemente zu vermeiden, ist es vorteilhaft, wenn der zwischen An- und Abtriebswelle an der Drehmomentbegrenzungskupplung gemessene Schlupf den anderen beiden Regelgrößen übergeordnet wird, entsprechend einer Schlupfregelung, welche bei vorbestimmtem Schlupfwert eine Entlastung der Preßkanalspanneinrichtung, z. B. durch Ablassen des Druckmittels auf einen vorbestimmbaren Minimalwert bewirkt.

Weitere zweckmäßige Ausgestaltungen ergeben sich aus den Unteransprüchen und aus der nachfolgenden Beschreibung eines Ausführungsbeispieles anhand einer einzigen, dieses schematisch darstellenden Figur.

Die dargestellte Kanalballenpresse 1 besteht im wesentlichen aus einem Zuführkanal 2 mit einer Fördereinrichtung 3, die Halmgutmaterial von unten in einen Preßkanal 4 mit rechteckigem Querschnitt hineinfördert, das in dem Preßkanal 4 durch einen über ein Hauptgetriebe 5 mittels Kurbeltrieb 6 hin- und hergehend angetriebenen Preßkolben 7 zu einem Preßstrang 8 verdichtet wird, der über eine nicht dargestellte Bindeeinrichtung in bekannter Weise zu einzelnen Ballen abgebunden wird. Der Preßkanal 4 hat zunächst einen starren Eingangsquerschnitt zwischen zwei Seitenwänden und einer Deckenwand 9 sowie einer Bodenwand 10. Der Preßkanal 4 setzt sich bis zu einem offenen Ausgang hin mit einem Preßkanalabschnitt 11 fort, in dem er nur noch bodenseitig feststehend begrenzt ist, während die Deckenwand 9 und zwei Seitenwände im Sinne einer konischen Verengung des Preßkanals 4 als schwenkbare Preßkanalspannschienen 12 ausgebildet und jeweils im Abstand von einem Schwenklager 13 mit einem Hydrozylinder 14 versehen sind.

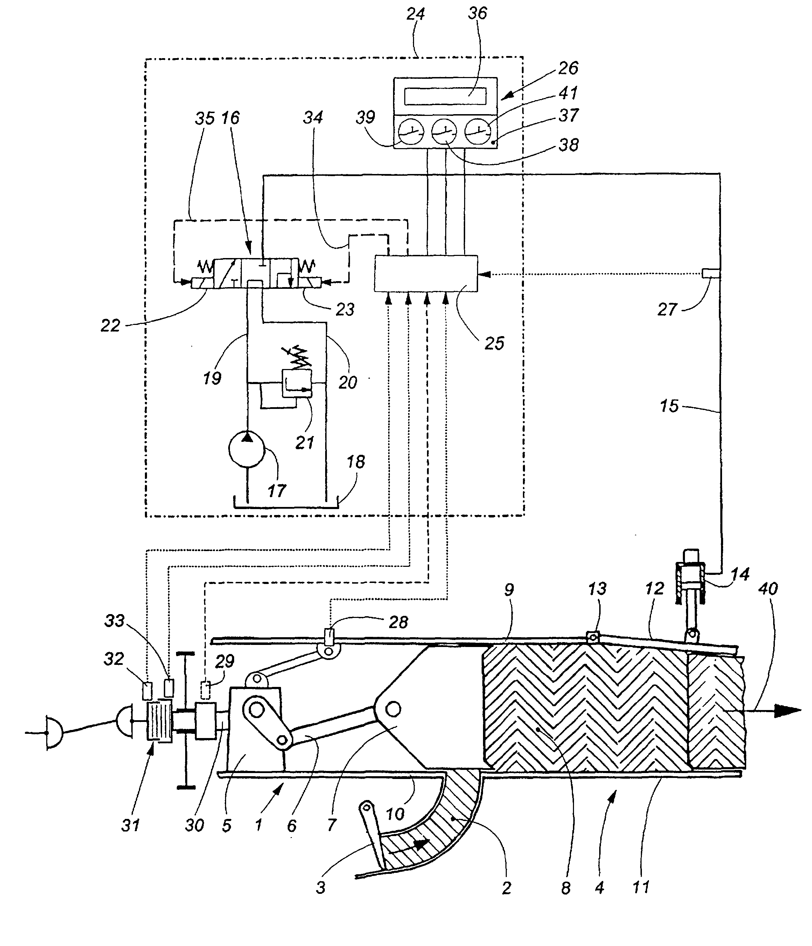

Der Hydrozylinder 14 ist über eine Druckleitung 15 mit einem elektromagnetisch betätigbaren 3/3 Wegeventil 16 verbunden. Das 3/3 Wegeventil 16 hat eine mittlere Umlauf-Nullstellung, wie in der Figur dargestellt, in der eine Hydropumpe 17 Druckmittel aus einem Vorratsbehälter 18 entnimmt und durch eine Vorlauf- 19 sowie eine Rücklaufleitung 20 drucklos umfördert. Vorlauf- 19 und Rücklaufleitung 20 sind miteinander durch ein einstellbares Druckbegrenzungsventil 21 verbunden. Durch Betätigen des linken Elektromagnetventiles 22, wandert der Steuerkolben nach rechts, so daß die Pumpe 17 Druckmittel in die Druckleitung 15 fördert; bei Betätigung des rechten Elektromagnetventiles 23 wird entsprechend Öl aus der Druckleitung 15 abgelassen und strömt zum Vorratsbehälter 18 zurück. Der maximale Druck in der Druckleitung 15 läßt sich am Druckbegrenzungsventil 21 voreinstellen. Das 3/3 Wegeventil ist Bestandteil einer elektronischen Regeleinrichtung, die allgemein mit der Ziffer 24 gekennzeichnet ist.

Die Regeleinrichtung 24 besteht im wesentlichen aus einer Vergleichseinrichtung 25, die einerseits mit einer elektronischen Bedieneinheit 26 und andererseits mit einem in der Druckleitung 15 angeordneten Druckfühler 27 sowie einem Lastmeßfühler 28, z. B. Kraftmeßbolzen der Fa. Bosch, für die Preßkolbenkraft verbunden ist. Preßkraft und/oder Hydrodruck dienen als Regelgrößen für die Steuerung der Kraft auf die Preßkanalspannschiene 12 und damit die Gegenkraft für den Preßkolben 7. Alternativ zu einem Lastmeßfühler 28 für die Preßkolbenkraft kann das Drehmoment durch einen gestrichelt gezeichneten Sensor 29, z. B. Drehmomentmeßnabe, an der Eingangswelle 30 des Hauptgetriebes 5 gemessen werden. Als dritte Regelgröße für die Beeinflussung der von dem Preßkolben 7 auf den Preßstrang 8 ausgeübten Kraft kann auch der Schlupf an einer Drehmomentbegrenzungskupplung 31 durch zwei Sensoren 32, 33 ermittelt werden, die mit der Vergleichseinrichtung 25 verbunden sind. Von der Vergleichseinrichtung führen zwei Steuerleitungen 34, 35 zum 3/3 Wegeventil 16.

Die Bedieneinheit 26 weist ein Display 36, eine Tastatur 37 sowie wenigstens einen Rechner und Speicher auf. Es sind wenigstens Sollwerte für den Druck in der Druckleitung 15 zum Hydrozylinder 14 sowie für die Preßkolbenkraft voreinstellbar. Ferner weist die Bedieneinheit 26 eine Mischeinrichtung 38 auf, mit der die Regelungsart wie Konstantdruck oder Konstantlast und das Mischverhältnis der Regelungsarten einstellbar sowie deren gemessene Istwerte dem Bediener anzeigbar sind. Darüber hinaus kann die Schaltung der Regelungsarten oder auch die Einstellung des Mischverhältnisses in Abhängigkeit von verschiedenen Parametern automatisch oder auch manuell erfolgen. Integriert ist softwaremäßig beispielsweise eine automatische Umschaltung von Konstantlast- auf Konstantdruckregelung, wenn der Lastmeßfühler 28 sprungartiges Absinken der Preßkraft signalisiert, z. B. am Vorgewende, wo kein Preßgut liegt und somit kein Preßgut zugeführt wird. Stellt man mit einem Feuchtesensor den Feuchtegehalt des Preßgutes fest, so kann von dieser Meßgröße beispielsweise die Sollvorgabe für den Druck in der Druckleitung 15 zum Hydrozylinder 14 abgeleitet werden.

Die Regeleinrichtung arbeitet wie folgt:

Zunächst stellt man an der Bedieneinheit 26 per Taste 39 numerisch den Drucksollwert ein, z. B. 30 Einheiten in Silage oder 90 Einheiten in Stroh; Wertebereich 0 .... 100 Einheiten. Die Mischeinrichtung 38 (Wertebereich 0 bis 10) wird auf Null verstellt, d. h. kein Mischbetrieb, reine Konstantdruckregelung. Die Vergleichseinrichtung 25 vergleicht den vom Druckfühler 27 gemessenen Istwert mit dem Sollwert. Die Regeleinrichtung 24 steuert den Druck über das 3/3 Wegeventil 16 aufgrund des Differenzwertes in der Druckleitung 15 so, daß bei kontinuierlicher Zufuhr eines gleichmäßigen Schwades eine gleichbleibende Preßdichte des Preßstranges 8 erreicht wird, der bei Gutszufuhr in den Preßkanal 4 bei jedem Hub des Preßkolbens 7 um einen Weg von ca. 50 bis 80 mm in Preßrichtung 40 weiterbewegt wird. Das Schlupfsignal von den Sensoren 32, 33 und der Lastmeßfühler 28 sind ohne Einfluß, jedoch kann der schwankende Istwert der Preßkolbenkraft an der Bedieneinheit 26 abgelesen werden. Bei Zuführung eines Schwadhaufens steigt bei dieser Regelungsart die Preßkraft erheblich an, während der Druck weitgehend konstant gehalten wird, in dem die Regeleinrichtung 24 den Steuerkolben des 3/3 Wegeventiles 16 bei gewünschter Druckabsenkung nach links und bei gewünschter Druckerhöhung nach rechts schiebt, bis die jeweilige Störung ausgeregelt ist. Die bei optimalem Preßdruck aktuell angezeigte Preßkraft wird per Taste 41 als Kraftsollwert übernommen.

Bei Stellung 10 der Mischeinrichtung 38, reine Konstantlastregelung, vergleicht die Vergleichseinrichtung 25 nur den vom Lastmeßfühler 28 gemessenen Kraftistwert mit dem Kraftsollwert. Die Regeleinrichtung 24 steuert den Druck in der Druckleitung 15 des Hydrozylinders 14 so, daß bei Störungen der Preßkraft durch feuchtes Material oder bei Zuführung von Haufen der Steuerkolben des 3/3 Wegeventiles 16 so verschoben wird, daß die Preßkraft weitgehend konstant bleibt, während der Druck stärker schwankt, was auf der Bedieneinheit 26 angezeigt wird. Bei hohen Durchsatzleistungen wird das vorgegebene Druckniveau so heruntergesteuert, daß stets der vorgegebene Kraftsollwert eingeregelt wird.

In den Zwischenstellungen 1 bis 9 sind die Regelungsarten Konstantdruck und Konstantlast überlagert. Je größer der Wert, desto größer ist der Einfluß der Konstantlastregelung. Der vorgegebene Sollkraft- und der Solldruckwert werden nicht mehr voll ausgeregelt, sondern es stellen sich Zwischenwerte ein, die weder der einen noch der anderen Vorgabe genau entsprechen. Durch Wahl der Zwischenstellungen können nunmehr die Vorteile der einen oder der anderen Regelungsart bei wechselnden Materialverhältnissen und Durchsatzleistungen genutzt werden. Um höchste Preßdichten in Stroh ohne Überlastung der Kanalballenpresse zu erreichen, stellt man beispielsweise die Mischeinrichtung 38 auf den Wert 3, während man in Silage die Werte 5 bis 8 wählt, um durch optimale Anpassung des Druckes auf die Preßkanalspannschiene 12 Überlastungen und Fehlfunktionen (Bindegarnriß) zu vermeiden. In Stellung 8 bewirkt die Konstantlastregelung darüber hinaus, daß das Druckniveau gegenüber dem vorgegebenen Drucksollwert automatisch verändert wird, um mit den Istdrücken auch vorgegebene Preßkraftsollwerte und damit höchste Preßdichten ohne Überlastung der Maschine zu erzielen.

Die weitere Funktion der Regeleinrichtung 24 besteht darin, daß die Regelungsart "Konstantkraft" automatisch bei Absinken der Preßkraft unter einen voreinstellbaren Wert auf "Konstantdruck" umschaltet, um bei fehlender Gutszufuhr, z. B. im Vorgewende durch die abfallende Preßkraft keine Druckerhöhung auf die Preßkanalspannschiene 12 zu bewirken, was bei erneuter Gutszufuhr zu Überlastungen führen könnte. Um die Wirkung einer Überlastsicherung wahrzunehmen, kann auch ein von der Maschinenfestigkeit abgeleiteter Maximal-Preßkraftwert gespeichert sein, bei dessen Überschreiten unabhängig von anderen Größen das 3/3 Wegeventil 16 auf Ablassen des Druckes bis auf einen Minimalwert gestellt wird, oder es wird das Druckbegrenzungsventil entsprechend angesteuert. Alternativ kann auch durch zwei Drehzahlsensoren 32, 33 an der Drehmomentbegrenzungskupplung 31 entstehender Schlupf gemessen, mit einem maximalen Sollwert verglichen und dieses Signal z. B. zum Reduzieren des Druckes auf die Preßkanalspannschiene 12 genutzt werden.

## Patentansprüche

1. Kanalballenpresse (1) mit einer Regeleinrichtung (24), bei welcher die Belastung eines Preßkolbens (7) eine erste Regelgröße darstellt, welche durch einen Lastmeßfühler (28 oder 29) gemessen wird und bei Abweichung von einem vorgegebenen Wert, der Führungsgröße, durch hydraulische Verstellung wenigstens einer Preßkanalspannschiene (12) auf die vorgegebene Führungsgröße einregelbar ist, **dadurch gekennzeichnet, daß** der hydraulische, durch einen Druckfühler (27) gemessene Druck auf die Preßkanalspannschiene (12) als eine zweite Regelgröße dient.

2. Kanalballenpresse nach Anspruch 1, **dadurch gekennzeichnet, daß** die Regeleinrichtung (24) eine Mischeinrichtung (38) aufweist, mittels welcher das Mischverhältnis der Regelabweichungen von Soll-Last und Soll-Druck voreinstellbar ist, um die eine oder die andere Regelgröße mehr oder weniger auf ihre jeweilige Führungsgröße einzuregeln, d. h. mehr oder weniger im Sinne von Konstantlast- oder Konstantdruckregelung zu arbeiten.

3. Kanalballenpresse nach Anspruch 1 oder 2, **dadurch gekennzeichnet, daß** die Regeleinrichtung (24) eine dritte Regelgröße aufweist, welche der an einer Drehmomentbegrenzungskupplung (31) gemessene Schlupf ist.

4. Kanalballenpresse nach einem oder mehreren der Ansprüche 1 bis 3, **dadurch gekennzeichnet, daß** die Sollwerte der Regelgrößen und die Regelungsart Konstantlast- oder Konstantdruckregelung sowie das Mischverhältnis an einer elektronischen Bedieneinheit (26) voreinstellbar und sowohl gemessene Istwerte als auch die Sollwerte dem Bediener anzeigbar sind.

5. Kanalballenpresse nach einem oder mehreren der vorhergehenden Ansprüche, **dadurch gekennzeichnet, daß** die Sollwerte, die Regelungsart und/oder das Mischverhältnis in Abhängigkeit von Gutsparametern wie Gutsfeuchte oder -art, Schwadstärke oder anderen Parametern automatisch verstellbar sind.

6. Kanalballenpresse nach einem oder mehreren der vorhergehenden Ansprüche, **dadurch gekennzeichnet, daß** bei der Mischregelung die Regelkreise überlagert sind, so daß der Einfluß der einen Regelungsart kleiner, gleich oder größer ist als der Einfluß der anderen Regelungsart, wobei vorgegebene Sollwerte einer Regelgröße entsprechend dem Mischverhältnis durch die andere automatisch verstellbar sind.

7. Kanalballenpresse nach einem der Ansprüche 1 bis 6, **dadurch gekennzeichnet, daß** der Drucksollwert, der Preßkraftsollwert sowie das Mischverhältnis an der Bedieneinheit (26) voreingestellt werden, und daß bei Änderung des Preßkraftsollwertes der Druckwert automatisch vom Rechner vorgegeben wird, so daß dieser ungleich vom Drucksollwert im Preßbetrieb sein kann.

8. Kanalballenpresse nach einem oder mehreren der vorhergehenden Ansprüche mit einer Drehmomentbegrenzungskupplung (31) im Antriebsstrang des Preßkolbens (7) oder eines anderen Hauptleistungsverbrauchers, **dadurch gekennzeichnet, daß** als in der Hierarchie oberste Regelgröße und vorzugsweise Überlastschutz der Kanalballenpresse (1), der zwischen An- und Abtriebswelle an der Drehmomentbegrenzungskupplung (31) gemessene Schlupf dient, entsprechend einer Schlupfregelung, welcher bei vorbestimmtem Schlupfwert eine Entlastung der Preßkanalspanneinrichtung (12, 14), z. B. durch Ablassen des Druckmittels bewirkt.

9. Kanalballenpresse nach einem oder mehreren der vorhergehenden Ansprüche, **dadurch gekennzeichnet, daß** die Regel- oder Steuereinrichtung (24) bei fehlender Gutszufuhr automatisch von Mischregelung bzw. Konstantlastregelung auf Konstantdruckregelung schaltet.

## Claims

1. A canal baler (1) with a control means (24), in which the loading of a pressing piston (7) constitutes a first controlled variable, which is measured by a load sensor (28 or 29) and, in the event of deviation from a given value, the reference variable, may be adjusted to the given reference variable by hydraulic adjustment of at least one pressing canal compression bar (12), **characterised in that** the hydraulic pressure on the pressing canal compression bar (12), measured by a pressure sensor (27), serves as a second controlled variable.

2. A canal baler according to claim 1, **characterised in that** the control means (24) comprises a mixing means (38), by means of which the mix ratio of the control deviations of load setpoint and pressure setpoint may be preset, in order to adjust the one or the other controlled variable to a greater or lesser extent to its respective reference variable, i.e. to operate more or less in the manner of constant load or constant pressure control.

3. A canal baler according to claim 1 or claim 2, **characterised in that** the control means (24) comprises a third controlled variable, which is the slip measured at a torque limiting coupling (31).

4. A canal baler according to one or more of claims 1 to 3, **characterised in that** the setpoint values of the controlled variables and the constant load or constant pressure control mode together with the mix ratio may be preset at an electronic operating unit (26) and both the measured actual values and the setpoint values may be displayed to the operator.

5. A canal baler according to one or more of the preceding claims, **characterised in that** the setpoint values, the control mode and/or the mix ratio may be automatically adjusted as a function of material parameters such as material dampness or type, swath thickness or other parameters.

6. A canal baler according to one or more of the preceding claims, **characterised in that,** in the case of mixed control, the control circuits are superimposed, such that the influence of the one control mode is less than, equal to or greater than the influence of the other control mode, wherein given setpoint values of a controlled variable may be adjusted automatically by the other in accordance with the mix ratio.

7. A canal baler according to one of claims 1 to 6, **characterised in that** the pressure setpoint value, the pressing force setpoint value and the mix ratio may be preset at the operating unit (26), and **in that**, in the event of a change in the pressing force setpoint value, the pressure value is automatically set by the computer, such that this may be different from the pressure setpoint value in pressing operation.

8. A canal baler according to one or more of the preceding claims with a torque limiting coupling (31) in the drive train of the pressing piston (7) or of another main power consuming unit, **characterised in that** the slip measured between drive and driven shaft at the torque limiting coupling (31) serves as the prime controlled variable in the hierarchy and preferably as overload protection for the canal baler (1), in the manner of slip control, which slip effects unloading of the pressing canal compression means (12, 14) in the event of a predetermined slip value, e.g. by letting out the pressure medium.

9. A canal baler according to one or more of the preceding claims, **characterised in that** the adjusting or control means (24) switches automatically from mixed control or constant load control to constant pressure control if material supply is absent.

## Revendications

1. Presse à balles à canal (1) comprenant un dispositif de réglage (24), dans laquelle la charge d'un piston preneur (7) représente une première valeur de réglage, qui est mesurée par un capteur dynamométrique (28 ou 29) et qui, en cas de divergence avec une valeur prédéfinie, à savoir la valeur de référence, peut être régulée à la valeur de référence prédéfinie par l'intermédiaire d'un réglage du vérin hydraulique agissant sur au moins un rail de serrage (12) du canal de compression, **caractérisée en ce que** la pression hydraulique, exercée sur le rail de serrage (12) du canal de compression et mesurée par un capteur de pression (27), est utilisée comme deuxième valeur de réglage.

2. Presse à balles à canal selon la revendication 1, **caractérisée en ce que** le dispositif de réglage (24) comporte un dispositif de réglage mixte (38), au moyen duquel il est possible de prédéfinir le rapport du réglage mixte des écarts des valeurs de la charge théorique et de la pression théorique, afin de réguler l'une ou l'autre valeur de réglage plus ou moins sur sa valeur de référence correspondante, c'est-à-dire de réguler le fonctionnement de la machine plus ou moins dans le sens d'un mode de réglage par charge constante ou d'un mode de réglage par pression constante.

3. Presse à balles à canal selon la revendication 1 ou 2, **caractérisée en ce que** le dispositif de réglage (24) comporte une troisième valeur de réglage, qui correspond au patinage mesuré sur le limiteur de couple (31).

4. Presse à balles à canal selon une ou plusieurs des revendications 1 à 3, **caractérisée en ce que** les valeurs théoriques des paramètres de réglage et le mode de réglage par charge constante ou par pression constante, ainsi que le rapport de réglage mixte peuvent être prédéfinis sur une unité de commande (26) électronique et les valeurs réelles mesurées, ainsi que les valeurs théoriques peuvent être affichées à l'attention de l'utilisateur.

5. Presse à balles à canal selon une ou plusieurs des revendications précédentes, **caractérisée en ce que** les valeurs théoriques, le mode de réglage et/ou le rapport de réglage mixte sont automatiquement réglables en fonction des paramètres de la matière à traiter, tels que l'humidité ou le type de matière, les dimensions de l'andain ou d'autres paramètres.

6. Presse à balles à canal selon une ou plusieurs des revendications précédentes, **caractérisée en ce qu'**en mode de réglage mixte les circuits de réglage sont hiérarchisés, de telle sorte que l'influence de l'un des modes de réglage est inférieure, identique ou supérieure à l'influence des autres modes de réglage, les valeurs théoriques prédéfinies pour un paramètre de réglage pouvant être régulées automatiquement par l'autre paramètre conformément au rapport de réglage mixte.

7. Presse à balles à canal selon une des revendications 1 à 6, **caractérisée en ce que** la valeur théorique de la pression, la valeur théorique de la force de compression, ainsi que le rapport de réglage mixte sont prédéfinis sur l'unité de commande (26), et **en ce que**, en cas de variation de la valeur théorique de la force de compression, la valeur de la pression est automatiquement prédéfinie par l'ordinateur, de telle sorte que celle-ci peut être différente de la valeur théorique de la pression dans le mode de réglage par force de compression.

8. Presse à balles à canal selon une ou plusieurs des revendications précédentes, comprenant un limiteur de couple (31) dans le mécanisme d'entraînement du piston presseur (7) ou d'un autre consommateur de la puissance maximale, **caractérisée en ce que** le patinage mesuré entre l'arbre d'entrée et l'arbre de sortie au niveau du limiteur de couple (31) est utilisé comme le paramètre de réglage prioritaire dans la hiérarchie et de préférence comme sécurité de surcharge de la presse à balles à canal (1), selon un réglage du patinage qui, en présence d'une valeur de patinage prédéfinie, entraîne une décharge du dispositif de serrage du canal de compression (12, 14), par exemple par une diminution du milieu sous pression.

9. Presse à balles à canal selon une ou plusieurs des revendications précédentes, **caractérisée en ce que**, en cas d'interruption de l'acheminement des matières, le dispositif de réglage ou de commande (24) bascule automatiquement du mode de réglage mixte ou du mode de réglage par charge constante vers le mode de réglage par pression constante.
